# EUROPEAN PATENT APPLICATION

(11) **EP 4 821 897 A1**
(43) Date of publication of application: **14.10.2026**
(21) Application number: 25305509.9
(22) Date of filing: 08.04.2025
(51) Int. Cl.: C02F 5/12, C02F 103/10, C02F 103/12, C02F 103/16, C02F 103/28, C02F 103/36

(54) **METHOD FOR TREATING FELDSPATHOID DEPOSITS IN AN INDUSTRIAL PROCESS**

(71) Applicant: SNF Group, 42160 Andrézieux-Bouthéon (FR)
(72) Inventor: GIRAULT, Laurie, 42160 ANDREZIEUX-BOUTHEON (FR); BONNEAU, Aurélien, 42160 ANDREZIEUX-BOUTHEON (FR); KIEFFER, Johann, 42160 ANDREZIEUX-BOUTHEON (FR)
(74) Representative: Ipsilon

(57) **Abstract**

The present invention relates to a method for treating feldspathoid deposits in an industrial process with a water-soluble deposit inhibitor.

## Description

### TECHNICAL FIELD OF THE INVENTION

The present invention relates to a method for treating feldspathoid deposits in an industrial process with a water-soluble deposit inhibitor.

### TECHNICAL BACKGROUND

Feldspathoid scale formation is an emerging issue in the pulp paper industry, particularly during pulping and white liquor recovery in a Kraft process.

These scales are aluminosilicate-based deposits that result from the interaction of dissolved silica, aluminium and sodium ions, in the presence of a high alkaline concentration and at a high temperature.

At the end of the Kraft process, the white liquor is recovered and recycled back to earlier stages of the process so as to cook fresh wood chips, creating a continuous loop.

However, over consecutive recycling cycles, the white liquor gets more and more enriched with silica, aluminium and sodium ions, until some of these species start reacting and form feldspathoid. Over time, the white liquor becomes more and more saturated, and feldspathoid scale start accumulating in the different devices, such as digesters, evaporators, tanks and heat exchangers. This buildup leads to flow restrictions and obstructions, which negatively impact liquor circulation and process efficiency. Moreover, due to their low thermal conductivity, these scale deposits on heat transfer surfaces reduce the performance of heat exchangers, leading to increased energy consumption.

Unlike more familiar scales like calcium carbonate, feldspathoid scales are thermally stable, chemically inert, and resistant to conventional acid cleaning, making them especially problematic.

In general, these deposits are managed through a descaling treatment, which involves taking the process equipment offline and physically or chemically removing the scale. This leads to significant and regular down-time periods, thus reducing the efficiency of the whole process. Additionally, the descaling process often involves hazardous concentrated chemicals, such as sulfuric acid, constituting safety risk for humans and for the environment.

Since conventional antiscale agents are often ineffective, managing these deposits requires a combination of preventive monitoring, feedstock control, and customized treatment programs. Addressing feldspathoid scaling is becoming increasingly critical as mills seek to optimize efficiency and reduce downtime.

Over the past decades, several scale inhibitors have been developed. For instance, WO2004009606 describes using a polymer having a silane moiety to treat feldspathoid scales. An improvement is disclosed in WO2006086189 with the grafting of a silane moiety on a polyethyleneimine backbone. In addition, WO2008045677 describes a hydrophobic polyethyleneimine polymer comprising a silane moiety.

Nevertheless, there is still a need for improving the efficiency of scale inhibitors. The Applicant has developed a new scale inhibitor exhibiting improved performances compared to known chemicals.

The new deposit inhibitor allows a reduction of polymer and hazardous chemical used for the removal of these deposits. It also reduces the number of down-time periods, thus increasing the overall process efficiency. Finaly, it reduces greenhouse gases emissions, like CO₂, by improving the efficiency of heat exchangers.

The present invention is advantageously carried out using materials of biological origin, such as biomass, or recycled materials. The energy used to carry out the process according to the invention is advantageously derived from heat pumps, a waste heat network, a renewable source, for example wind power or photovoltaics, or from a fuel cell, a lithium battery or a nuclear power plant.

### SUMMARY OF THE INVENTION

The invention relates to a method for treating feldspathoid deposits in an industrial process, comprising at least the addition of a water-soluble deposit inhibitor to a process water; wherein the water-soluble deposit inhibitor is a branched water-soluble polymer comprising C₂-C₁₀ alkylamine units;
wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic group or a silane-based group;
the water-soluble polymer having a molecular weight of between 800 and 15 000 g/mol.

The present invention also relates to a water-soluble deposit inhibitor that is a branched water-soluble polymer comprising C₂-C₁₀ alkylamine units;
wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic group or a silane-based group;
the water-soluble polymer having a molecular weight of between 800 and 15 000 g/mol.

Preferably, this branched water-soluble polymer has at least monomeric units [A], [B] and [C]:
wherein

A = -[(CH₂)ₙNH]- B = -[(CH₂)ₙ-N(R¹)]- C= -[(CH₂)ₙ-N(R²)]-

- n is an integer between 2 and 10, preferably 2 (CH₂CH₂);
- R¹ is a linear or branched C₂-C₁₀ alkylamine;
- R² is a linear or branched C₂-C₁₀ alkylamine having at least one amine functionalized with a group selected from: a hydrophobic group, a silane based group, or a mixture thereof.

### DESCRIPTION OF THE INVENTION

By "deposit inhibitor" is meant a polymer that prevents, reduce or delays the formation and accumulation of solid deposits on a surface in a system or process, for example a scale inhibitor.

By "water-soluble deposit inhibitor" is meant a deposit inhibitor that yields an aqueous solution without insoluble particles when it is dissolved under stirring at 25°C and with a concentration of 10 g.L⁻¹ in deionized water.

As used herein, the expression "A and/or B" means "A, or B, or A and B".

Furthermore, where ranges of values are indicated, the end-values are part of these ranges. The disclosure also includes all combinations between the end-values of these ranges. For example, ranges "1-20, preferably 5-15", imply disclosure of the ranges "1-5", "1-15", "5-20" and "15-20".

All the particular and/or preferred embodiments described in the invention are combinable, provided they are not incompatible.

The amount of primary, secondary and tertiary amine in the polymer can be determined using H NMR spectrometry, for example using a RMN Ascend 400 MHz (quantitative method).

The grafting conditions for the silane pendant groups and the hydrophobic pendant groups are usual and do not require any particular skill. The conditions depend on the nature of the polymeric backbone and the chemistry of the silane and hydrophobic pendant groups. These are classical conditions that the skilled man in the art know and will adjust to achieve the desired results.

### Method of treating deposits in an industrial process

The invention relates to a method for treating feldspathoid deposits in an industrial process, comprising at least the addition of a water-soluble deposit inhibitor to a process water, wherein the water-soluble deposit inhibitor is a branched water-soluble polymer comprising C₂-C₁₀ alkylamine units;
wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic group or a silane-based group;
the water-soluble polymer having a molecular weight of between 800 and 15 000 g/mol.

Preferably, the C₂-C₁₀ alkylamine units are C₂ alkylamine units.

The water-soluble deposit inhibitor is used to treat feldspathoid deposits. Examples of feldspathoids include kalsilite (KAlSiO₄), leucite (KAlSi₂O₆), nepheline (NaAlSiO₄), haiiyne Na₆Ca₂Al₆Si₆O₂₄(SO₄)₂, lazurite (Na,Ca)₈(AlSiO₄)₆(SO₄,S,Cl,OH)₂, nosean (Na₈Al₆Si₆O₂₄(SO₄)), sodalite (Na₄(AlSiO₄)₃Cl)), tugtupite (Na₄AlBeSi₄O₁₂Cl), afghanite (Na,Ca,K)₈(AlSiO₄)₆(SO₄,Cl₂,CO₃)₃ • 0.5 H₂O, cancrinite (Na₆Ca₂Al₆Si₆O₂₄(CO₃)₂·2H₂O); vischnevite (Na,K)₈(Al₆Si₆O₂₄)(SO₄,CO₃)·2H₂O. Preferably, the feldspathoid deposits is sodalite.

The skilled man in the art knows how to adjust the quantity of water-soluble deposit inhibitor to achieve the desired results.

Generally, the amount of water-soluble deposit inhibitor is from 5 to 100 ppm, based on the weight of the process water, preferably between 5 and 80 ppm, more preferably between 5 and 30 ppm.

The process water can come from any industrial process in which feldspathoid deposits form, preferably such as water treatment, oil and gas industries, mining industries, paper and pulp industries, glass industries, ceramics industries, metallurgy industries, chemical processing.

The process water preferably comes from an industrial process selected from: paper industry, pulp industry (for instance evaporation of cooking liquors), geothermal water treatment, mining industry (for instance lixiviation process of alumina, copper or gold), and metallurgy industry. In particular, the process water preferably comes from steel industry, from blast furnace cooling circuits.

The water-soluble deposit inhibitor is particularly efficient for process water with silicate-rich and alkali-rich conditions, for example in a Bayer process.

The process water preferably comprises sodium hydroxide, silicon dioxide and sodium carbonate.

The process water advantageously has a sodium hydroxide concentration of between 5 and 500 g/L, preferably of between 50 and 200 g/L, more preferably of between 100 and 180 g/L.

The process water advantageously has a dissolved silica (silicon dioxide) concentration of between 0.1 and 10 g/L, preferably between 0.3 and 10 g/L, preferably of between 1.25 and 5 g/L, more preferably of between 2 and 3 g/L.

The process water advantageously has a sodium carbonate concentration of between 0.1 and 100 g/L, preferably between 10 and 70 g/L, more preferably between 20 and 50 g/L.

The water-soluble deposit inhibitor can be used to reduce deposit in cooling towers, boilers, heat exchangers, reverse osmosis membranes, pipelines, storage tanks, production wells, water injection systems, subsea equipment, separators, steam turbines, condensers, boiler tubes, heat recovery steam generators, leaching tanks, slurry pipelines, thickeners, settlers, evaporation ponds, washing equipment, bleaching towers, paper machine circuits, valves, pumps, filters.

In a preferred embodiment, the feldspathoid is sodalite and the process water comes from a Bayer process.

In this preferred embodiment, the water-soluble deposit inhibitor can be added at any step of the Bayer process, it can be added at any one of the followings: in the bauxite slurry before, during or after the digestion step to treat deposit on the heat exchanger(s); in the tank(s); during the clarification step to treat deposit in the pipe(s) and or tank(s); during the heat recovery step to treat deposit on the heat exchanger(s); in the precipitation step to treat deposit in the pipe(s); during the evaporation step to treat deposit in the equipment; or any combination thereof. Preferably, the water-soluble deposit inhibitor is added in the heat exchanger(s).

The energy used to carry out the process according to the invention is advantageously derived from a heat pump; a waste heat network; a renewable source, for example wind power or photovoltaics; a fuel cell; a lithium battery; or a nuclear power plant.

### Water-soluble deposit inhibitor

The present invention also relates to a water-soluble deposit inhibitor;
wherein the water-soluble deposit inhibitor is a water-soluble polymer comprising C₂-C₁₀ alkylamine units wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic or silane-based group;
the water-soluble polymer having a molecular weight of between 800 and 15 000 g/mol.

In a preferred embodiment, the water-soluble polymer has at least monomeric units [A], [B] and [C]:

A = -[(CH₂)ₙNH]- B = -[(CH₂)ₙ-N(R¹)]- C= -[(CH₂)ₙ-N(R²)]-

- n is an integer between 2 and 10, preferably 2 (CH₂CH₂);
- R¹ is a linear or branched C₂-C₁₀ alkylamine;
- R² is a linear or branched C₂-C₁₀ alkylamine having at least one amine functionalized with a group selected from: a hydrophobic group, a silane based group, or a mixture thereof.

The water-soluble deposit inhibitor is a water-soluble polymer, preferably a branched polyethyleneimine.

The polyethyleneimine is preferably obtained by polycondensation of ethylene dichloride with ammonia or by polycondensation of aziridine. Preferably, the polymeric backbone is a polyethyleneimines obtained by polycondensation of aziridine.

The water-soluble polymer has advantageously an amount of primary amine of less than 40 mol%, preferably of between 15 and 39 mol%, more preferably between 28 and 38 mol%, based on the total moles of amines in the C₂-C₁₀ alkylamine units.

The water-soluble polymer has an amount of secondary amine of between 50 and 75 mol%, preferably between 50 and 70 mol%; more preferably between 50 and 60 mol%, based on the total moles of amines in the C₂-C₁₀ alkylamine units.

The water-soluble polymer has advantageously an amount of tertiary amine of less than 30 mol%, preferably of between 10 and 28 mol%, more preferably between 15 and 25 mol%, based on the total moles of amines in the C₂-C₁₀ alkylamine units.

The skilled person in the art is able to adjust the respective amounts of primary amine, secondary amine and tertiary amine in order to reach a total amount of 100%.

Between 10 and 45 mol% of the secondary amines of the C₂-C₁₀ alkylamine units have a hydrophobic group or silane-based group, preferably between 15 and 35 mol%, more preferably between 20 and 30 mol%.

The water-soluble polymer has advantageously an amount of secondary amines substituted with a hydrophobic of between 5 and 35 mol%, preferably of between 7 and 18 mol%, more preferably of between 10 and 15 mol%, based on the total moles of amines in the C₂-C₁₀ alkylamine units.

The hydrophobic compound bearing a reactive function as advantageously at least 4 carbon atoms, preferably at least 6 carbon atoms, more preferably at least 8 carbon atoms, more preferably at least 10 carbon atoms and advantageously at most 20 carbon atoms, preferably at most 18 carbon atoms, more preferably at most 16 carbon atoms and even more preferably at least 14 carbon atoms. The hydrophobic pendant group can optionally comprise one or more heteroatoms (O, N, S, P), and can optionally comprise one or more unsaturation.

The hydrophobic group is preferably grafted onto a primary or secondary amine of the water-soluble polymer by conventional methods known to those skilled in the art. Preferably, the secondary amine of the C₂-C₁₀ alkylamine units having a hydrophobic group result(s) from reacting a primary amine of the water-soluble polymer with a hydrophobic compound bearing at least a reactive function. For instance, the hydrophobic group can be grafted by reacting the water-soluble polymer with a hydrophobic compound bearing at least a reactive function, for example, an epoxide function, an isocyanate function, an alkoxy function, a halide function (chloro, bromo...), a maleimide function, a carboxylic acid function, an aldehyde function, a ketone function, a vinyl function, an acrylate function, a thiol function or an anhydride function. Preferably, the hydrophobic compound has a halide function.

The hydrophobic compound bearing a reactive function is advantageously selected from the group consisting of: chlorododecane, bromododecane, chlorohexadecane, bromohexadecane, bromooctadecane glycidyl 2-ethylhexyl ether, glycidyl-dodecyl ether, glycidyl hexadecyl ether, glycidyl tetradecyl ether and glycidyl octadecyl ether.

The water-soluble polymer has advantageously an amount of secondary amines substituted with a silane-based group of between 5 and 35 mol%, preferably of between 7 and 18 mol%, more preferably of between 10 and 15 mol%.

The silane-based group is advantageously of formula II:

-Si(OR⁴)(OR⁵)(OR⁶) (II)

wherein:
R⁴, R⁵ and R⁶, independently, represent an hydrogen atom, an alkyl group having between 1 and 20 carbons optionally substituted, an aryl having between 6 and 20 carbons optionally substituted, an aralkyl having between 7 and 20 carbons optionally substituted, an alkenyl having between 2 and 20 carbons optionally substituted, an alkaline metal salts (Li, Na, K, etc.), an alkaline earth metal salts (Ca, Mg, etc.) or an ammonium salts (for example, ammonium ion or a tertiary ammonium).

In a preferred embodiment, the silane-based group R⁴, R⁵ and R⁶ represent, independently from each other, an alkyl group having between 1 and 20 carbons, preferably between 1 and 10, more preferably between 1 and 5. More preferably R⁴, R⁵ and R⁶ represent a methyl.

The silane-based group is grafted onto a primary or secondary amine of the water-soluble polymer by conventional methods known to those skilled in the art. The secondary amine of the C₂-C₁₀ alkylamine units having a silane-based group preferably results from reacting a primary amine of the water-soluble polymer with a silane compound bearing at least a reactive function. For instance, the silane-based group can be grafted by reacting the water-soluble polymer with a silane compound bearing at least a reactive function, for example, an epoxide function, an isocyanate function, an alkoxy function, a halide function (chloro, bromo...), a maleimide function, a carboxylic acid function, an aldehyde function, a ketone function, a vinyl function, an acrylate function, a thiol function or an anhydride function. Preferably, the silane compound has an epoxide function.

The silane compound bearing a reactive function is advantageously selected from the group consisting of: glycidoxytrimethoxysilane, glycidoxypropyltrimethoxysilane, 3-glycidoxypropyltriethoxysilane, 3-glycidoxytriethoxysilane, diethoxy(3-glycidyloxypropyl) methylsilane, dodecyltrichlorosilane, trimethylbromosilane and tributylchlorosilane.

The water-soluble polymer has a molecular weight of between 800 and 15 000 g/mol, preferably of between 1 000 and 10 000 g/mol, more preferably of between 1 200 and 5 000 g/mol.

The water-soluble polymer has advantageously an intrinsic viscosity of between 4 and 20 mL/g, preferably of between 4 and 10 mL/g, more preferably of between 4 and 7 mL/g.

The intrinsic viscosity [η] is determined using a capillary viscometer under the following conditions:
- Measurement is performed at room temperature (20 °C);
- The relative viscosity is measured for at least five dilute polymer solutions (with a concentration below the overlap concentration C*);
- Intrinsic viscosity is calculated according to Huggins equation.

The method is based on the measurement of the pressure drop (ΔP) generated by the flow of the polymer solution through a capillary tube made of polyether ether ketone (PEEK), having a known internal diameter, at a fixed flow rate (Q) imposed by a syringe pump, and at a constant temperature.

Each dilute polymer solution is injected using a high-precision piston pump, and the reduced viscosity (η_{red}) is plotted as a function of polymer concentration. Intrinsic viscosity [η] is obtained by extrapolating the reduced viscosity to zero concentration, according to the Huggins equation: ${η}_{red} = \frac{{η}_{rel} - 1}{C}$ where:
- η_{red} is the reduced viscosity,
- ηᵣₑₗ is the relative viscosity of the solution,
- C is the polymer concentration expressed in g/L.

The Huggins constant k_{H} may also be determined from the slope of the linear fit using the following expression: ${k}_{H} = \frac{slope}{{IV}^{2}}$

The molecular weight is preferably determined by the intrinsic viscosity of the polymer. Intrinsic viscosity is preferably measured by methods known to those skilled in the art and can be calculated from reduced viscosity values for different polymer concentrations by a graphical method consisting of plotting reduced viscosity values (y-axis) against concentration (x-axis) and extrapolating the curve to zero concentration. The intrinsic viscosity value is plotted on the y-axis or using the least-squares method. The molecular weight can then be determined by the Mark-Houwink equation:$η = {K}^{Mα}$
**[n]** represents the intrinsic viscosity of the polymer as determined by the solution viscosity method.
**K** represents an empirical constant.
**M** represents the molecular weight of the polymer.
**α** represents the Mark-Houwink coefficient.
**K** and **α** depend on the particular polymer-solvent system.

The water-soluble polymer has advantageously a Huggins coefficient of 2 or above 2, preferably of between 2 and 30, more preferably of between 5and 25, more preferably of between 7 and 20.

The Huggins coefficient is measured at a polymer mass concentration of 5 g·L⁻¹ in a 0.4N sodium nitrate solution in water, at a pH of 3.5, and at 25°C.

In a preferred embodiment, the water-soluble polymer originates from a raw material comprising at least partially renewable and non-fossil origin.

In the context of the invention, the terms "of renewable and non-fossil origin" designate the origin of a chemical compound issuing from biomass or synthetic gas (syngas), namely, one that is the result of one or more chemical transformations performed on one or more raw materials of natural, and non-fossil, origin. The terms "bio-sourced" or "bio-resourced" can also be used to characterize the renewable and non-fossil origin of a chemical compound. The renewable and non-fossil origin of a compound includes renewable and non-fossil raw materials coming from the circular economy, and which have been previously recycled, one or more times, during a recycling process of material coming from biomass, such as, for example, material coming from polymer depolymerization or from the transformation of pyrolysis oil.

According to the invention, "at least partially of renewable and non-fossil origin" means a content of bio-sourced carbon comprised between 5% by weight and 100% by weight based on to the total carbon weight of said compound, preferably at least 30%, more preferably at least 50%, even more preferably at least 70%, more preferably at least 90% and even more preferably 100% bio-sourced carbon.

In the context of the invention, the standard ASTM D6866-21, method B, is used to characterize the bio-sourced nature of a chemical compound, and to determine the bio-sourced content of said compound. The value is expressed in percent by weight of bio-sourced carbon based on to the total weight of carbon in said compound.

The ASTM D6866-21 standard is a test method that teaches how to experimentally measure the bio-sourced carbon content of solids, liquids and gaseous samples by radiocarbon analysis.

In a preferred embodiment, between 5 and 100 wt% of the carbon atoms of the water-soluble deposit inhibitor, based on the total carbon atoms weight of the water-soluble deposit inhibitor, are bio-sourced carbon, the bio-sourced carbon content being measured in accordance with ASTM D6866-21, Method B.

In a particularly preferred embodiment, 50 to 100 wt% of the carbon atoms of the water-soluble deposit inhibitor originate from a raw material comprising recycled material or materials of biological origin, the biobased.

### EXAMPLES

### EXAMPLE 1 - Deposit inhibitor preparation

Deposit inhibitors D1 was prepared according to the following protocol:
100 g of polyaziridine were added to a reactor, followed by 24.24 g of glycidyl-dodecyl ether and 30.62 g of 3-glycidoxypropyltriethoxysilane.

The mixture was then heated to 50 C and stirred continuously for 4 hours.

During the reaction, a waxy solid forms and is crushed through mixing, then diluted to 10 wt% with a 2 wt% aqueous solution of caustic soda (NaOH).

Deposit inhibitor D2 is prepared according to Example 5D of document WO08045677.

Deposit inhibitors D3 to D7 were prepared as D1. However, the amount of reactant, based on 100g of polyaziridne, is:
- 56.31 g of glycidyl-dodecyl ether;
- 64.69 g of 3-glycidoxypropyltriethoxysilane.

For each example, the polyziridine backbone is modified either to adjust the secondary amine content or to vary the molecular weight, highlighting the boundaries of the present invention.

The properties of deposit inhibitors D1-D7 are resumed in table 1.

**Table 1 - Properties of deposit inhibitors D1-D7 (Inv = invention; CEx = counter-example)**

| Deposit inhibitor | Amount of secondary amines | Amount of secondary amines substituted with a hydrophobic or silane-based group (mol%) | Molecular weight (g/mol) |
|---|---|---|---|
| D1 - CEx | 50 | 9 | 1 800 |
| D2 - CEx | 47 | 11 | 2 000 |
| D3 - CEx | 60 | 20 | 600 |
| D4 - Cex | 70 | 20 | 18 000 |
| D5 - Inv | 62 | 20 | 1 200 |
| D6 - Inv | 65 | 20 | 2500 |
| D7 - Inv | 67 | 20 | 10 000 |

### EXAMPLE 2 - Deposit inhibitor performances measurement

A synthetic brine was prepared to measure the inhibition performances of deposit inhibitors D1-D7. The composition of this synthetic brine is resumed in table 2.

**Table 2: Composition of the synthetic brine**

| **Raw Material** | **Proportion** |
|---|---|
| Sodium aluminate | 4.5 % |
| Sodium carbonate | 4% |
| Sodium chloride | 1.7% |
| Caustic soda (50%) | 30% |
| Water | 59.8% |

To evaluate the scale inhibition performance of deposit inhibitors D1 to D7, a synthetic liquor was prepared by mixing the selected deposit inhibitor, sodium silicate, and 250 g of synthetic brine.

The mixture was transferred into sealed bottles and incubated at 95 °C for 24 hours.

After the heating period, the amount of scale deposited in each bottle was collected by filtration on a 45µm pore filter, weighted and compared to that formed in blank samples (without deposit inhibitor), the percentage of scale inhibited by the deposit inhibitors D1-D7 can be determined.

The results are resumed in table 3.

**Table 3 - Scale inhibition performances of deposit inhibitor D1 to D7 (CEx = counter-example; Inv = invention)**

| | | | | |
|---|---|---|---|---|
| **SiO₂ Concentration** | 1.25 g.L⁻¹ | | 2.5 g.L⁻¹ | |
| **Deposit inhibitor dosage** | 30 ppm | 10 ppm | 30 ppm | 10 ppm |
| **Deposit inhibitor** | Inhibition performance (%) | | | |
| Blank | 0 | | | |
| D1 - CEx | 86 | 56 | 15 | 3 |
| D2- CEx | 88 | 54 | 18 | 5 |
| D3 - CEx | 99 | 27 | 13 | 1 |
| D4 - CEx | 65 | 15 | 2 | - |
| D5 - Inv | 99 | 98 | 96 | 93 |
| D6- Inv | 98 | 98 | 94 | 91 |
| D7 - Inv | 97 | 97 | 95 | 92 |

An inhibition performance of 99% means that the presence of the deposit inhibitor leads to only 1%, by weight, of the scale that was formed in the blank sample. In other words, 1% by weight of the scale that would form in the absence of deposit inhibitor (blank sample) could be recovered on the filter of sample D5 (30ppm, 1.25 g.L⁻¹ SiO₂).

Deposit inhibitors D5-D7 afford the best results, regardless of the concentration in SiO₂ (1.25 or 2.5 g.L⁻¹) or the quantity of deposit inhibitor (10 or 30 ppm).

## Claims

1. Method for treating feldspathoid deposits in an industrial process, comprising at least the addition of a water-soluble deposit inhibitor to a process water;
wherein the water-soluble deposit inhibitor is a branched water-soluble polymer comprising C₂-C₁₀ alkylamine units;
wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic group or a silane-based group;
the water-soluble polymer having a molecular weight of between 800 and 15 000 g/mol.

2. Method according to claim 1, ***wherein*** the feldspathoid deposits is sodalite.

3. Method according to any one of the preceding claims, ***wherein*** the amount of water-soluble deposit inhibitor is from 5 to 100 ppm based on the weight of the process water.

4. Method according to any one of the preceding claims, ***wherein*** the process water comes from an industrial process selected from: paper industry, pulp industry, geothermal water treatment, mining industry, and metallurgy industry.

5. Method according to any one of the preceding claims, ***wherein*** the process water comprises sodium hydroxide, silicon dioxide and sodium carbonate.

6. Method according to any one of the preceding claims, ***wherein*** the secondary amine of the C₂-C₁₀ alkylamine units having a hydrophobic group results from reacting a primary amine of the water-soluble polymer with a hydrophobic compound bearing at least a reactive function.

7. Method according to claim 6, ***wherein*** the hydrophobic compound bearing a reactive function is selected from the group consisting of: chlorododecane, bromododecane, chlorohexadecane, bromohexadecane, bromooctadecane glycidyl 2-ethylhexyl ether, glycidyl-dodecyl ether, glycidyl hexadecyl ether, glycidyl tetradecyl ether, and glycidyl octadecyl ether.

8. Method according to any one of the preceding claims, ***wherein*** the secondary amine of the C₂-C₁₀ alkylamine units having a silane-based group results from reacting a primary amine of the water-soluble polymer with a silane compound bearing at least a reactive function.

9. Method according to claim 8, ***wherein*** the silane compound bearing at least a reactive function is selected from the group consisting of: glycidoxytrimethoxysilane, glycidoxypropyltrimethoxysilane, 3-glycidoxypropyltriethoxysilane, 3-glycidoxytriethoxysilane, diethoxy(3-glycidyloxypropyl) methylsilane, dodecyltrichlorosilane, trimethylbromosilane and tributylchlorosilane.

10. Method according to any one of the preceding claims, ***wherein*** said method is carried out using energy derived from a heat pump, a waste heat network, a renewable source, a fuel cell, a lithium battery or a nuclear power plant.

11. Method according to any one of the preceding claims, ***wherein*** the C₂-C₁₀ alkylamine units are C₂ alkylamine units.

12. Water-soluble polymer comprising C₂-C₁₀ alkylamine units wherein the C₂-C₁₀ alkylamine units comprise primary amine, secondary amine and tertiary amine;
wherein the secondary amine of the C₂-C₁₀ alkylamine units represent between 50 mol% and 75 mol%, based on the total moles of amines in the C₂-C₁₀ alkylamine units;
wherein between 10 and 45 mol% of the secondary amine of the C₂-C₁₀ alkylamine units have a hydrophobic or silane-based group;
the water-soluble polymer having a molecular weight of between 800 and 15 000 g/mol.

13. Water-soluble deposit inhibitor according to claim 12, ***wherein*** 5 to 100% by weight of the carbon atoms of the water-soluble deposit inhibitor, based on the total carbon atoms weight of the water-soluble deposit inhibitor, are bio-sourced carbon, the bio-sourced carbon content being measured according to the standard ASTM D6866-21, Method B.
